# FASCICULE DE BREVET EUROPEEN

(11) **EP 0 580 055 B1**
(45) Date de publication et mention de la délivrance du brevet: **22.01.1997**
(21) Numéro de dépôt: 93111134.8
(22) Date de dépôt: 12.07.1993
(51) Int. Cl.: B29D 30/30

(54) **Procédé et machine pour la mise en place sur noyau d'un seul fil de renfort dans la fabrication d'une carcasse de pneumatique**
Verfahren und Vorrichtung zum Anordnen eines einfädigen Verstärkungsdrahtes auf einen Kern bei der Herstellung von Reifenkarkassen
Process and apparatus for arranging on a core a single reinforcing wire in the manufacturing of tire carcasses

(30) Priorité: 21.07.1992 FR 9209256
(43) Date de publication de la demande: 26.01.1994
(73) Titulaire: SEDEPRO, F-75015 Paris (FR)
(72) Inventeur: Laurent, Daniel, F-38240 Meylan (FR); Mayet, Jean-Claude, F-63000 Clermont-Ferrand (FR)
(74) Mandataire: Bauvir, Jacques

(56) Documents cités:
- WO-A-86/01151
- WO-A-89/02492
- AT-B- 390 762
- FR-A- 2 583 399
- US-A- 3 721 599
- US-A- 4 277 295
- US-A- 4 775 433

## Description

La présente invention concerne la fabrication des pneumatiques. Plus particulièrement, elle se rapporte à la mise en place des fils pour constituer un renforcement du pneumatique comme par exemple une carcasse.

Dans ce domaine technique, on connaît déjà des procédés et machines qui permettent d'intégrer la fabrication des renforcements de pneumatique à l'assemblage du pneumatique lui-même. Cela signifie que, plutôt que de recourir à des produits semi-finis, comme des nappes de renforcement, on réalise un ou les renforcements in situ, au moment où l'on fabrique le pneumatique, et à partir d'une seule bobine de fil. On connaît par exemple la solution décrite dans le brevet US 4 795 523. Bien que cette solution présente un progrès considérable par rapport aux techniques conventionnelles faisant appel à des nappes de renforcement, elle présente l'inconvénient qu'une machine conçue pour mettre en oeuvre cette solution ne peut réaliser que des pneumatiques ayant toujours le même nombre de fil dans le renforcement ainsi fabriqué, par exemple toujours le même nombre d'arceaux radiaux dans une carcasse radiale.

On connaît aussi la solution décrite dans le brevet US 4 952 259. Cette proposition, qui est basée sur la projection d'un fil à la manière de la lanière d'un fouet, permet de balayer les angles courants des nappes dites de sommet. Elle permet aussi de réaliser des renforts de carcasse, dans lesquels le fil va d'un talon à l'autre du pneumatique. Cependant, elle permet difficilement d'atteindre des angles faibles, comme on en trouve parfois dans certains renforts de sommet. Pour rappel, les angles sont mesurés par rapport à la référence définie par un plan perpendiculaire à l'axe de rotation du pneumatique, selon la convention bien établie.

L'objectif de la présente invention est de proposer un procédé de fabrication qui permette de réaliser, à partir d'un seul fil, tous les renforts de carcasse, ainsi que la plupart des renforts de sommet, c'est-à-dire les renforts que l'on trouve sous la bande de roulement dans lesquels l'angle que forment les fils de ces renforts par rapport au plan perpendiculaire à l'axe de rotation du pneumatique est sensiblement différent de zéro degré.

Un autre objectif de l'invention est de proposer un procédé qui permette de réaliser un renfort quel que soit le nombre de fils dont on souhaite pourvoir le renforcement.

Un autre objectif de l'invention est que l'appareil qui met en oeuvre le procédé soit mécaniquement aussi simple et léger que possible, et que cet appareil n'impose que au maximum des réglages simples à mettre en oeuvre pour s'adapter à toutes les variantes des renforts pour pneumatique à exécuter, en couvrant la plus grande gamme de pneumatiques possible.

Selon l'invention, le procédé de fabrication d'un pneumatique en caoutchouc, consistant à appliquer sur un support les différents constituants à la place requise par l'architecture du pneumatique, à appliquer le fil de renforcement sur le support pour former des arceaux contigus de la façon suivante : poser le fil en l'appliquant par adhésion sur le support à un départ correspondant au bord d'un arceau ; déplacer un moyen de guidage, en relation de guidage avec glissement sur le fil, par dessus le support selon une trajectoire en arc qui contourne et survole le support, depuis le départ jusqu'à une arrivée correspondant à l'autre bord du même arceau ; appliquer le fil, par adhésion, sur le support à ladite arrivée ; répéter les opérations précédentes de façon alternée, de gauche à droite, puis de droite à gauche par dessus le support, en déplaçant le support par rapport au moyen de guidage d'une valeur correspondant au pas de pose entre deux déplacements alternés dudit moyen de guidage.

Le cycle de base du procédé selon l'invention comporte donc les étapes suivantes :
- poser le fil en l'appliquant par adhésion sur le support à un départ correspondant au bord d'un arceau,
- déplacer ledit moyen de guidage, en relation de guidage avec glissement sur le fil, par dessus le support selon une trajectoire en arc depuis le départ jusqu'à une arrivée correspondant à l'autre bord du même arceau,
- appliquer le fil, par adhésion, sur le support à ladite arrivée,
et on répète les opérations précédentes de façon alternée, de gauche à droite, puis de droite à gauche par dessus le support, en déplaçant le support par rapport au moyen de guidage d'une valeur correspondant au pas de pose entre deux déplacements alternés dudit moyen de guidage.

Dans son mouvement instantané, l'organe de guidage est à tout moment compris dans un plan comprenant la trace que fait le fil à l'endroit où il se pose sur le support. Pour poser un arceau qui définira un plan sur un support supposé immobile, l'organe de guidage, et le vecteur vitesse de celui-ci sont en permanence compris dans ce plan. Ceci définit le principe de pose selon l'invention. Pour tenir compte du mouvement du support pendant la pose, ou pour poser un arceau qui ne s'inscrit pas dans un plan, il peut y avoir de légères déviations par rapport à ce plan théorique, comme cela apparaîtra dans la suite de la description.

Le mouvement global de l'organe de guidage est un mouvement alterné de va-et-vient. De préférence, lors de chaque changement de direction, on retient le fil au contact du support par l'intervention de moyens presseurs.

On entend par "fabrication d'un pneumatique" une fabrication aussi bien complète que partielle, dès lors que au moins un renforcement est fabriqué selon le procédé de l'invention. Le terme "fil" doit bien entendu être compris dans un sens tout à fait général, englobant un monofilament, un multifilament, un assemblage comme par exemple un câble ou un retors, et ceci quelle que soit la nature du matériau. Dans le présent mémoire, on emploie le terme "arceau" pour désigner un tronçon de fil allant d'un point singulier à un autre dans l'armature de renforcement. L'ensemble de ces arceaux disposés sur tout le pourtour du pneumatique forme le renforcement proprement dit. Un arceau au sens défini ici peut faire partie d'une carcasse, ou d'un renfort de sommet, ou de tout autre type de renfort. Ces arceaux peuvent être individualisés par une coupe du fil en cours de pose, ou tous reliés entre eux dans le renforcement final.

Fondamentalement, l'invention traite de la fabrication à partir d'un seul fil, extrait par exemple d'une bobine. Il importe peu que le renforcement réellement fabriqué le soit, pour être complet, en plusieurs passes successives, avec coupe du fil ou non entre deux passes.

Enfin, lorsque l'on définit des positions, des directions ou des sens avec les mots "radialement, axialement, circonférentiellement", ou lorsque l'on parle de rayons, on prend pour repère le noyau sur lequel on fabrique le pneumatique, ou le pneumatique par lui-même, ce qui revient au même. L'axe ou le point de référence est l'axe de rotation du support ou son point médian correspondant sensiblement à son centre de gravité.

Le procédé selon l'invention comporte un autre avantage : il permet très facilement de réaliser un renforcement, par exemple un renforcement de carcasse, dans lequel le pas de pose du fil est variable. On entend par "pas de pose" la distance résultant de la somme de l'écart entre deux fils adjacents et le diamètre du fil. Il est bien connu que pour un renforcement de carcasse, l'écart entre fils varie selon le rayon auquel on le mesure. Il ne s'agit pas de cette variation dont il est question ici, mais bien d'un pas variable à un rayon donné. Il suffit pour cela de, sans changer la cadence de travail des moyens de guidage, faire varier selon toute loi appropriée la vitesse de rotation du support. Au cours d'une révolution, la vitesse de celui-ci va décrire une loi sinusoïdale, de sorte que la variation du pas est sinusoïdale. On obtient ainsi un pneu dont les fils de renforcement de carcasse, par exemple pour une carcasse radiale, sont disposés selon un pas présentant une variation contrôlée pour une position radiale donnée.

L'invention propose aussi une machine de fabrication qui permet la mise en oeuvre du procédé. Le fil étant délivré à la demande par un distributeur approprié comportant par exemple une bobine de fil puis un organe de contrôle de la tension du fil extrait de la bobine, la machine de fabrication d'un renfort à partir d'un seul fil coopère avec un support (noyau rigide ou une membrane armée) sur lequel on fabrique le pneumatique.

Elle est caractérisée en ce qu'elle comprend :
- un organe de guidage avec glissement dans lequel le fil peut coulisser librement,
- un moyen de déplacement dudit organe de guidage selon une trajectoire en va-et-vient,
- des presseurs disposés au moins à chaque extrémité de ladite trajectoire, pour appliquer le fil sur le support,
l'ensemble étant agencé de sorte que, lorsque le fil adhère sur le support grâce à l'intervention d'un presseur, le déplacement dudit organe de guidage allonge le trajet du fil entre ledit presseur et le distributeur de fil, tout en présentant le fil par dessus la trace qu'il fera sur le support après pose, la pose intervenant progressivement en arrière du moyen de guidage, et au plus tard lors de l'intervention d'un autre presseur, qui lui-même intervient au plus tard avant le mouvement inverse du moyen de guidage le long de sa trajectoire en va-et-vient.

Par exemple, le moyen de déplacement est constitué par un brin souple, sans fin, monté dans un circuit de guidage (un chemin de guidage fermé sur lui-même), et courbé de façon à présenter l'allure générale d'un arc. Ce circuit permet de réaliser le mouvement de va-et-vient prévu dans le procédé de l'invention, selon une variante particulièrement intéressante parce qu'il n'y a pas de mouvement alternatif : la vitesse tangentielle de l'organe de guidage le long du circuit peut être constante.

La machine comporte un dispositif de présentation et de réglage de la position du circuit de guidage par rapport au support, celui-ci étant introduit à l'intérieur des, et entre les branches de l'arc qu'il forme.

L'organe de guidage est par exemple constitué par un oeillet pivotant fixé sur le brin souple et dans lequel on fait passer le fil de renforcement, l'axe de pivotement étant perpendiculaire au circuit de guidage, et au rayon passant par l'oeillet. On installe des presseurs à chaque extrémité de l'arc. Ceux-ci permettent de saisir le fil chaque fois qu'il y est amené par l'oeillet, et de le plaquer sur le support.

Enfin, la machine comporte des moyens permettant d'animer le brin souple, et d'entraîner en rotation le support à une vitesse fonction du temps mis par l'oeillet pour faire un tour complet sur le circuit de guidage et fonction du pas de pose souhaité pour le fil.

Il est important de bien comprendre que le mouvement du support n'est pas un paramètre nécessaire pour le procédé de pose de l'invention. Le mouvement du support est simplement nécessaire pour que les arceaux successivement enroulés sur le support se disposent de façon ajacente et contiguë. L'amplitude de ce mouvement est donc fonction de l'épaisseur du fil et de l'écart souhaité entre deux arceaux contigus.

La machine décrite dans la suite est spécialement conçue pour fabriquer des carcasses. L'arc doit donc aller d'un bourrelet à l'autre ; il prend l'allure d'un C. Si l'on conçoit une machine spécialement pour les renforcements de sommet, l'arc doit aller d'une épaule à l'autre, et aurait alors l'allure d'une parenthèse. Il va de soi que l'on peut concevoir une machine qui peut fabriquer aussi bien les renforts de carcasse que les renforts de sommet, comme cela apparaitra clairement dans la suite.

Le circuit de guidage est courbé de telle sorte qu'il dessine un C emboîté dans un Ω. A partir du moment où l'on va d'un point à un autre en décrivant un C, il est nécessaire de décrire un Ω pour fermer la figure puisque l'on utilise un brin "sans fin" : une chaîne dans la suite de la description mais cela pourrait tout aussi bien être une courroie, ou un autre moyen équivalent comme un câble, entrainé sans glissement. Le circuit de guidage est de préférence disposé sensiblement dans un plan.

L'intérêt de cette disposition est qu'elle permet de contourner le support ; elle permet donc d'atteindre successivement deux points du support pris chacun dans la zone correspondant à un bourrelet du pneumatique, tout en dégageant dans le centre du circuit de guidage un maximum d'espace pour pouvoir justement insérer le support. Une machine conçue selon ce principe est capable de poser des fils allant d'une épaule à l'autre pour un renfort de sommet de pneumatique, même lorsqu'il s'agit d'un pneumatique large (rapport H/B petit), et un angle faible de pose du fil, ce qui conduit à un grand écart circonférentiel entre le point situé dans une épaule et le point situé dans l'autre épaule.

Le réglage de la position du circuit de guidage par rapport au support permet de définir le tracé de pose du fil sur le support. Il s'agit d'un plan radial dans la suite de la description parce qu'on y décrit la réalisation d'une carcasse pour un pneumatique radial, sans que bien entendu cela ne soit limitatif.

Par ce procédé, l'organe de guidage - l'oeillet dans l'appareil illustré - survole le support en suivant d'assez près le tracé souhaité pour le fil dans le renforcement. Il suffit que le fil adhère sur le support à un point de départ quelconque sur le tracé souhaité. La suite du mouvement de l'oeillet va amener celui-ci à disparaître derrière le support, par rapport à ce point de départ. Dès lors le fil se pose nécessairement sur le support puisqu'il ne peut, à partir du point de départ, rejoindre l'oeillet en ligne droite. On s'arrange pour que le mouvement de va-et-vient de l'oeillet le rapproche des points les plus écartés d'un fil dans le renforcement à fabriquer : d'un bourrelet à l'autre pour un renfort de carcasse, et d'une épaule à l'autre pour un renfort de sommet.

Lorsque l'on a indiqué que le fil est plaqué sur le support, cela signifie qu'il est plaqué vers le support prérevêtu d'au moins une couche de caoutchouc à cet endroit, pour que le fil y adhère, mais cela n'exclut évidement pas qu'il y ait déjà sur le support d'autres produits, caoutchouteux ou non, et d'autres fils de renforcement, selon l'architecture du pneumatique à fabriquer. L'homme du métier sait que pour fabriquer un pneumatique sur un support, il s'agit de réaliser un empilement de tous les constituants en partant de celui le plus proche du support, généralement la gomme d'étanchéité à l'air du pneumatique. Par rapport à l'invention, la seule chose importante est qu'il y ait sur le support, au moins aux extrémités du tracé de pose du fil (ou à un endroit très proche de celles-ci), un matériau sur lequel le fil puisse adhérer.

La suite de la description permet de bien faire comprendre tous les aspects de l'invention, en s'appuyant sur les figures suivantes :
La figure 1 est une vue en élévation d'une machine selon l'invention ;
La figure 2 est une vue par le côté droit à la figure 1 de la même machine ;
La figure 3 est un schéma esquissant, en projection sur un plan radial, l'allure que prend le fil à des instants successifs, lorsqu'il est posé selon le procédé de l'invention ;
La figure 4 est une vue générale des principaux organes de l'appareil de pose du fil ;
La figure 5 est un agrandissement de la partie droite de la figure 4 ;
Les figures 6 à 13 représentent les stades successifs du fonctionement des presseurs utilisés dans la machine selon l'invention ;
Les figures 14 à 17 montrent les organes constitutifs des presseurs, à des instants successifs ;
La figure 18 illustre un réglage de l'appareil de pose du fil ;
Les figures 19 à 21 illustrent la phase finale de la fabrication d'un renforcement ;
La figure 22 illustre la retenue du fil après fabrication, pendant l'évacuation du support ;
La figure 23 illustre la phase initiale de la fabrication d'un renforcement ;
Les figures 24 à 29 représentent les stades successifs de la commande des presseurs selon une variante de réalisation.

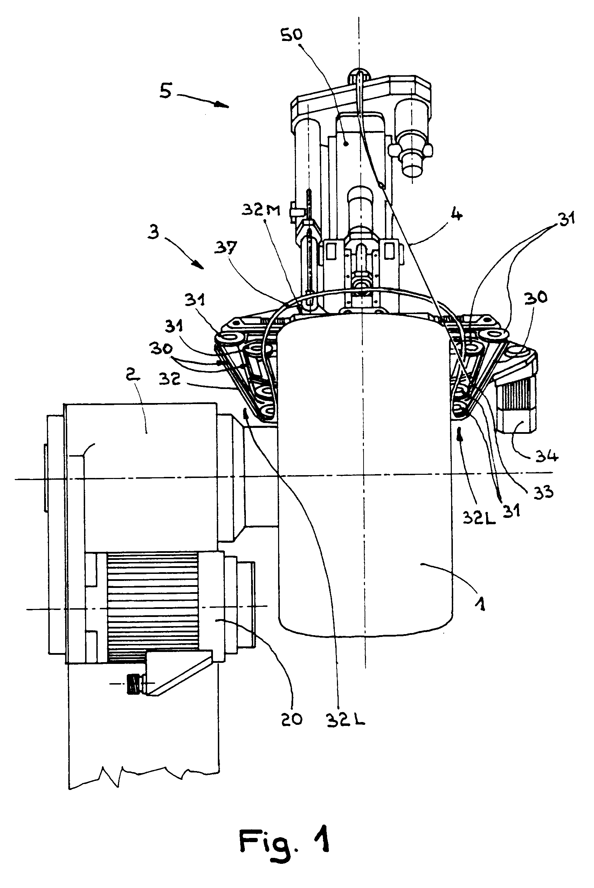

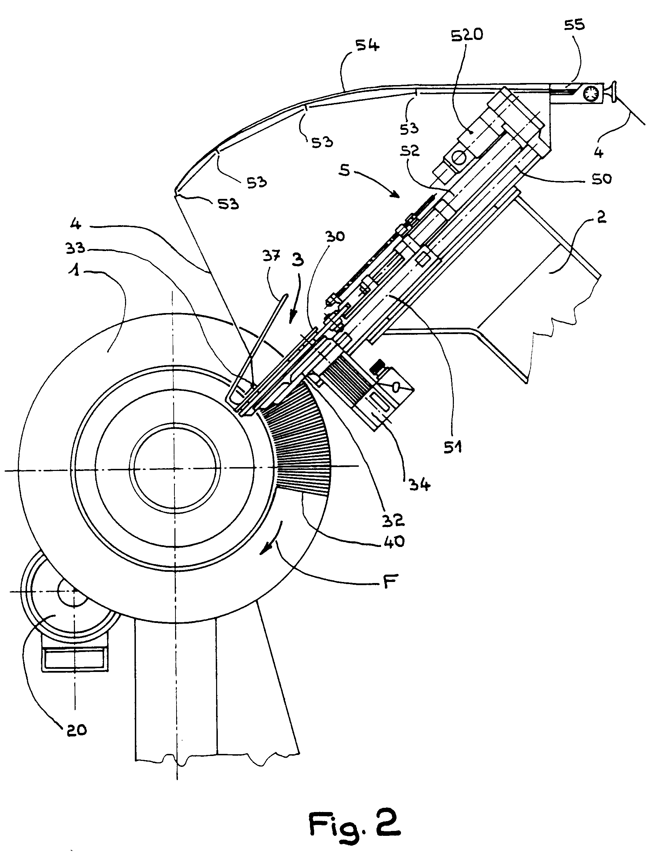

Aux figures 1 et 2, on voit que le support est un noyau 1 (rigide et démontable) définissant la géométrie de la surface intérieure du pneumatique. Celui-ci a été revêtu d'une couche de gomme d'étanchéité à base de caoutchouc butyl, et d'une couche de gomme de calandrage destinée à retenir le fil par adhésion. Le noyau 1 est monté en porte-à-faux sur un bâti 2, et est entraîné en rotation par le moteur 20.

L'appareil 3 de pose du fil 4 comporte une chaîne à rouleaux 30 tenant lieu de brin souple. La chaîne 30 est montée sur des poulies 31, qui sont montées sur un berceau 32. La disposition d'ensemble ainsi réalisée fait office de circuit de guidage. Le circuit que parcourt la chaîne 30 a l'allure d'un C. Celui-ci comporte une partie médiane 32M et deux parties latérales 32L articulées sur la partie médiane 32M, comme cela sera expliqué plus en détail, avec l'aide de la figure 14. La figure que forme le circuit parcouru par la chaîne constitue une sorte de pince dont l'ouverture est réglable. Elle peut s'adapter à plusieurs largeurs de noyau 1, et peut s'ouvrir suffisamment pour laisser passer la partie la plus large du noyau 1.

La partie médiane 32M du support 32 est montée sur un dispositif 5 de présentation et de réglage de la position de l'appareil 3 par rapport au noyau 1. Ce dispositif comporte un rail 50 de coulissement fixé rigidement sur le bâti 2, orienté de façon à ce que le circuit soit orienté radialement. Un châssis 51 est emboîté sur le rail 50, et peut glisser sur celui-ci. Son mouvement de glissement est contrôlé par un vérin 52 à vis commandé par le moteur 520.

Le fil 4 est délivré par une bobine (non représentée) via un tendeur 55 assurant le contrôle de la tension, puis est enfilé sur les anneaux 53 d'une canne 54, dont la flexibilité assure la compensation nécessaire entre l'appareil 3, qui impose que le fil lui soit délivré à une vitesse cycliquement variable, pouvant être négative, et le tendeur 55 en amont, qui interdit tout retour en arrière. Une tige de déviation 37 évite que le fil 4 n'entre en contact avec le noyau 1 de façon prématurée. Ce fil 4 est enfilé sur un oeillet 33 monté pivotant sur la chaîne 30. La chaîne 30 est entraînée par le moteur 34 : l'oeillet 33 décrit un mouvement de va-et-vient d'un bourrelet à l'autre, ou plus précisément d'un endroit proche d'un bourrelet, à un endroit proche de l'autre bourrelet.

Le rail 50 de glissement est fixé au bâti 2 de telle sorte que l'oeillet 33 décrive son mouvement de va-et-vient par dessus et autour du noyau, dans un plan radial : ce procédé permet de poser un fil 4 formant une carcasse radiale, le fil formant alors des arceaux 40 radiaux sur le noyau 1, comme on le voit à la figure 2. La flèche F représente le sens de rotation du noyau 1.

La machine décrite ici n'est pas prévue pour faire autre chose que des carcasses radiales. Il va de soi cependant que l'invention n'est pas limitée à cette application. Pour adopter un plan de pose incliné par rapport à l'axe et notamment pour poser des renforts de sommet, il suffit de prévoir un degré de liberté de rotation du rail 50 autour d'un axe orienté radialement, et passant par le milieu du noyau 1, ce qui permet d'orienter le support 32 par rapport au noyau 1.

On peut prévoir très facilement d'ouvrir le circuit de guidage formé par la chaîne 30 suffisamment pour que, en ayant présenté celui-ci selon un angle typique pour un renfort de sommet (15° à 25° par exemple), le va-et-vient de l'oeillet 33 l'amène d'une épaule à l'autre par dessus le noyau 1, permettant ainsi de poser des arceaux constituant la ceinture d'un pneumatique radial.

Pour réaliser une carcasse croisée, ou bien pour s'éloigner quelque peu d'une orientation purement radiale, on peut prévoir d'incliner le support 32 par rapport au plan radial, en le basculant autour d'un axe parallèle à l'axe de rotation. On peut bien entendu combiner ce réglage avec celui appliqué au paragraphe précédant notamment pour réaliser des renforts de carcasse croisés. On peut encore, sans rien changer aux organes de la machine telle que décrite, entraîner le noyau à une vitesse assez élevée, par exemple 1/8 de tour pour 1/2 tour de la chaîne 30, de sorte que l'on obtient un angle de pose du fil qui est fonction du rapport entre la vitesse de la chaîne et la vitesse du noyau. On constate ainsi que la machine permet aussi, de façon optionnelle, d'introduire le mouvement de rotation du support comme paramètre de pose du fil.

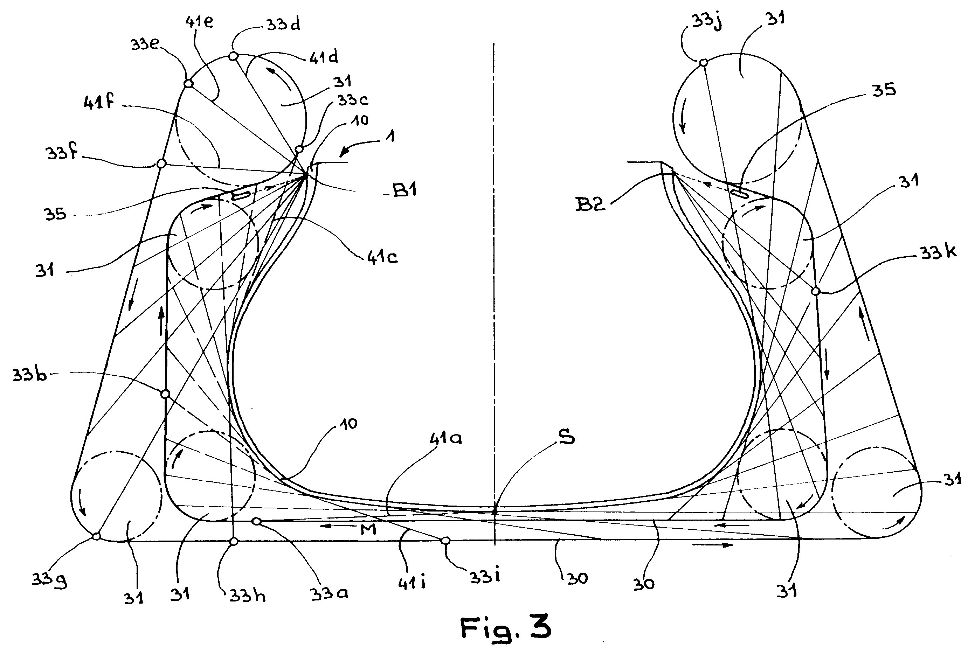

La figure 3, par l'explication détaillée du mouvement de base, permet de bien faire comprendre comment on assure la pose d'un fil 4 sur le noyau 1. Notons d'abord que celui-ci est revêtu de la ou des couches de caoutchouc 10 nécessaires, ainsi que d'autres fils de renfort, éventuellement nécessaires notamment au niveau de chaque bourrelet. On reconnaît les poulies 31 sur lesquelles est montée la chaîne 30 à rouleau, une flèche sur chaque poulie 31 indique le sens de son mouvement. On suppose d'abord que le fil 4 est maintenu plaqué sur le noyau 1 à un endroit quelconque de sa trajectoire souhaitée sur le pneumatique, par exemple au milieu S du sommet du noyau 1. L'oeillet 33 est supposé être en 33a et il s'éloigne de S dans le sens indiqué par la flèche M. Le fil 4 se dispose comme indiqué par le trait interrompu 41a.

La poursuite du mouvement de l'oeillet 33 va provoquer le glissement du fil 4 à l'intérieur de celui-ci, et donc l'appel de fil 4 puisque celui-ci est délivré au départ sensiblement dans le plan médian du noyau 1 par la canne 54, comme on le voit en particulier à la figure 1. Les positions ultérieures de l'oeillet 33 sont marquées 33b, 33c, ..., 33k. Les allures successives prises par le fil 4 sont représentées par des réseaux de courbes : le premier réseau de courbes en traits discontinus, puis un second réseau de courbes en traits continus. Parvenu en 33b, on voit qu'il n'y a pas de ligne droite possible entre 33b et S : le fil 4 est donc enroulé sur le sommet du noyau 1. Lorsque l'oeillet 33 est parvenu en 33c, l'un des presseurs 35 disposés à chaque extrémité du circuit de guidage saisit le fil 4 et le plaque sur le noyau en B1. Le premier réseau de courbes s'arrête en 41c.

Ces presseurs 35 sont réglés pour intervenir dès que l'oeillet 33 a amené le fil 4 à chaque extrémité du circuit de guidage et que le fil 4 est disposé entre le noyau 1 et lesdits presseurs 35.

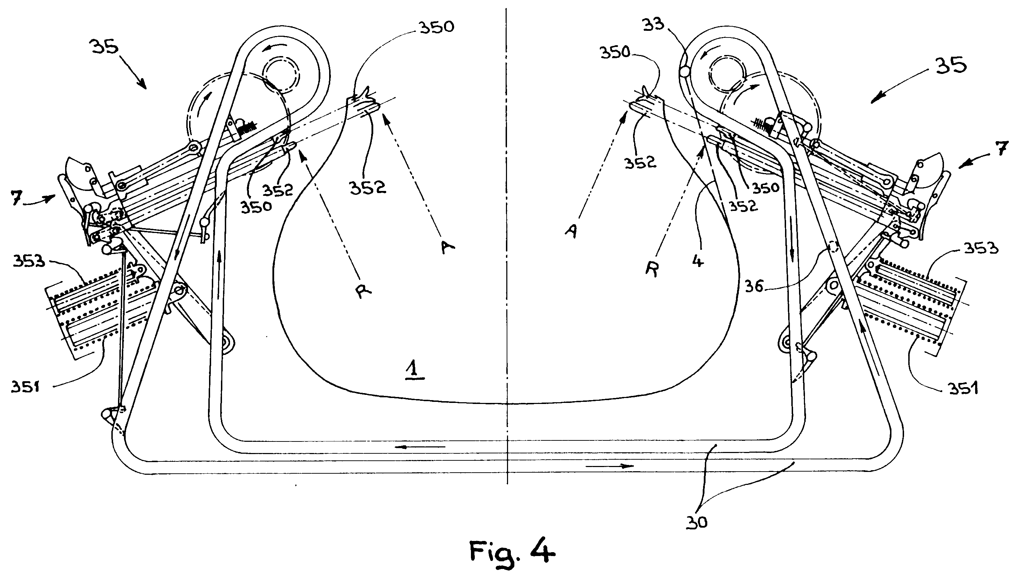

A partir du point B1, les positions successives du fil 4 entraîné par l'oeillet 33 vont tracer un nouveau réseau de courbes, représentées en traits continus, et dont la première 41d va jusqu'à la position 33d de l'oeillet sur l'une des poulies 31 (celle de gauche à la figure 4). On voit que, entre 33e et 33f, puis à nouveau entre 33g et 33h, puis à nouveau entre 33j et 33k, la distance entre le dernier point où le fil s'est collé sur le noyau 1 et l'oeillet 33 diminue. C'est pourquoi l'alimentation en fil 4 de l'appareil 3 doit être capable de ravaler du fil 4, et de façon générale, être capable de maintenir une tension dans le fil 4 malgré les fluctuations très grandes de l'appel de fil par l'appareil 3. Le réseau de courbes 41d, 41e, ..., 41i, ...permet de bien voir comment le fil 4 se pose progressivement sur le noyau 1. Finalement, lorsque l'oeillet 33 est parvenu en 33k, l'autre des presseurs 35 intervient pour plaquer le fil au point B2 dans le bourrelet.

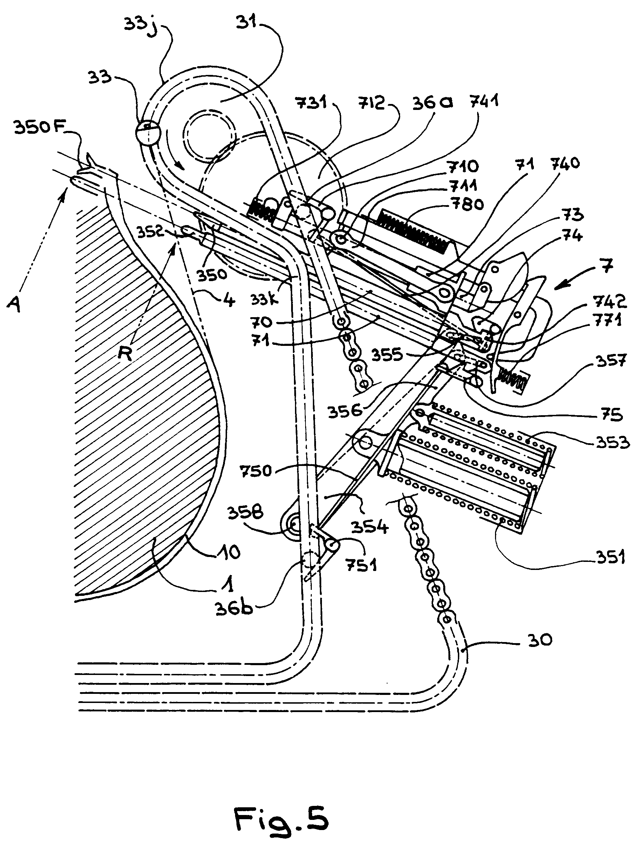

Aux figures 4 et 5, on voit que les presseurs 35 réalisés pour la machine selon l'invention comportent, chacun, une fourche 350 mobile entre une position reculée, en R, éloignée du noyau 1, et une position avancée, en A. La position représentée en A est la position que prendrait la fourche 350 en l'absence du noyau 1, sous l'effet du ressort 351 qui pousse sur la fourche 350 via le levier 354 et la biellette 355. En utilisation réelle, la fourche 350 est arrêtée lorsqu'elle entre en contact avec les éléments constitutifs du pneumatique déjà déposés : revêtement de caoutchouc et éventuellement fils de renfort ; elle permet donc de plaquer le fil 4 avec une force suffisante pour qu'il adhère correctement à l'endroit souhaité.

Le mouvement de l'oeillet entre les points 33j et 33k de la figure 3 permet à celui-ci de venir accrocher le fil 4 sur la fourche 350 lorsqu'elle est en position réculée R (voir aussi à la figure 5). On remarque que ses deux branches sont alors disposées dans un plan perpendiculaire au plan de la figure 4 ou de la figure 5, ce qui permet à la fourche 350 de retenir le fil 4 qui lui est présenté par l'oeillet 33.

La fourche 350 passe ensuite en position avancée A. Au début de son mouvement d'avance, la fourche 350 effectue en même temps un quart de tour pour que ses deux branches parviennent dans le plan des figures 4 et 5 bien avant d'avoir atteint le noyau 1. De chaque côté du noyau, ce quart de tour amène la branche qui se trouve du côté où l'on présente le fil à la fourche 350 du côté des plus grands rayons.

En examinant les figures 4 et 5, on considère que le fil 4 est amené par dessus le plan de la figure ; la branche 350F des fourches 350 qui, en position reculée R, fait saillie hors du plan de la figure, vers l'observateur - autrement dit du côté où l'on délivre le fil 4 - bascule vers les plus grands rayons pendant le mouvement vers la position A. Notons également que chaque arceau 40 de fil 4 posé par la machine disparaît derrière le plan de la figure 4, ce qui définit le sens de rotation du noyau 1, qui apparaît aussi à la figure 2.

De préférence, les presseurs comportent en outre un marteau 352 qui contribue à parfaire l'ancrage du fil 4 dans la couche de caoutchouc sur le noyau 1. Ce marteau 352 est lui aussi mobile entre une position rétractée, en R, et une position avancée, en A. Il avance vers le noyau 1 sous l'effet du ressort 353 qui pousse sur le marteau 352 via le levier 356 et la biellette 357. Les leviers 354 et 356 ont tous deux le même point de pivotement 358.

Le marteau 352 intervient après la fourche 350 : il avance vers le noyau 1 après que la fourche 350 ait plaqué le fil 4 sur le noyau 1 : il appuie sur le fil 4 à une position radiale un peu plus élevée, et retient le fil 4 lorsque la fourche 350 se rétracte. Cela évite que celle-ci n'emporte avec elle la boucle de fil 4 qui s'est formée autour d'une de ses branches, et qui même si elle est collée sur le caoutchouc, pourrait avoir tendance à rester solidaire de la fourche. L'ancrage du fil 4 dans le bourrelet s'en trouve parfaitement fiabilisé. Il suffit que le marteau 352 revienne à sa position reculée à temps pour son intervention lors de la prochaine présentation du fil 4 par l'oeillet 33.

De préférence, le basculement en position avancée, et en position reculée, aussi bien pour la fourche 350 que pour le marteau 352, est commandé par un ergot 36, fixé sur la chaîne 30 du côté opposé à l'oeillet 33. Par rapport au plan de la figure 4 ou 5, l'oeillet 33 se trouve par dessus - du côté de l'alimentation en fil 4 - et l'ergot 36 se trouve par dessous, ainsi que les mécanismes 7 d'armement et de déclenchement actionnant les fourches 350 et les marteaux 352.

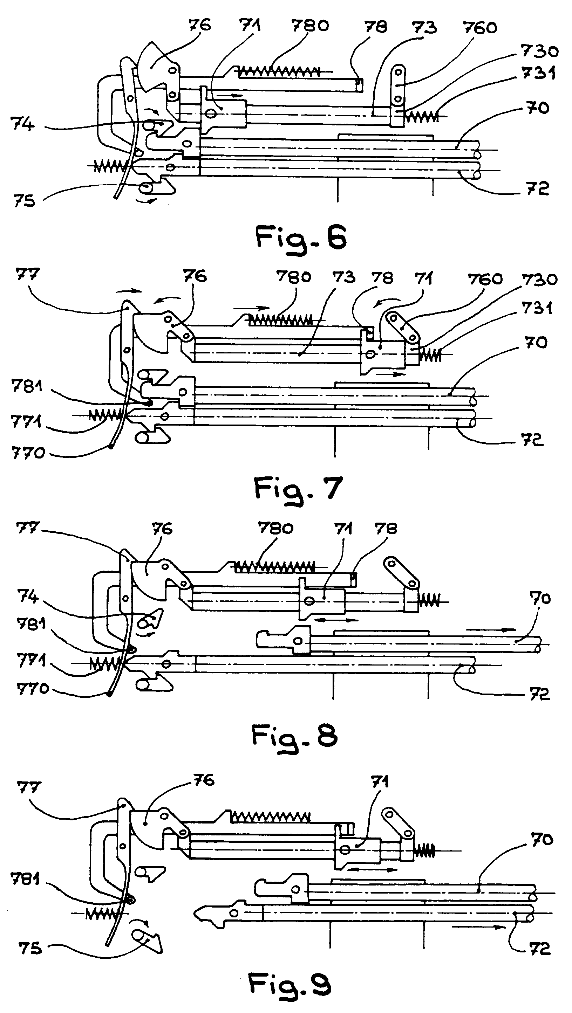

Les figures 6 à 13 illustrent plus en détail un de ces mécanismes 7, identiques de chaque côté du circuit de guidage. En consultant en parallèle la figure 5, on comprendra bien comment et à quel moment du cycle ces mécanismes coopèrent avec la chaîne 30 qui rythme le fonctionnement de l'appareil 3 et comment ils causent les mouvements des fourches 350 et des marteaux 352.

On voit la queue 70 de la fourche 350, ainsi que la queue 72 du marteau 352. Un coulisseau 71 glisse sur une tige 73. Le coulisseau 71 effectue en permanence un mouvement alternatif sous l'action d'une bielle 711 (voir figure 5) commandée par un maneton 710 monté sur un engrenage 712. Celui-ci est entraîné en rotation par la poulie 31 d'extrémité du circuit de guidage.

A la figure 6, les queues 70 et 72 sont retenues respectivement par les cliquets 74 et 75. La tige 73 forme un parallélogramme avec la came 76 et la biellette 760, parallélogramme qui peut se déformer comme représenté à la figure 7 : parvenu à l'extrémité de la tige 73, le coulisseau 71 appuie sur l'épaulement 730, contre le ressort antagoniste 731 ; la came 76 tourne, ce qui permet au verrou 77 de la retenir à la position atteinte. Ceci termine l'armement du mécanisme. Par la suite, en dehors de l'intervention de l'ergot 36, le mécanisme reste en position armée , alors même que le coulisseau 71 continue son mouvement alternatif sur la tige 73, et chaque fois, sollicite la gachette 78, qui recule contre la pression du ressort 780, ce qui fait reculer d'autant le taquet 781.

La patte arrière 770 du verrou 77, qui aurait tendance à avancer vers la droite de la figure 7 sous l'action du ressort 771, est maintenue en position verrouillé par le taquet 781, et par la queue 72 du marteau, qui agissent en parallèle. Dès lors, tant que le taquet 781 et la queue 72 ne se trouvent pas tous les deux avancés vers la droite au même moment, la patte arrière 770 du verrou reste immobile, et le verrou 77 empêche la came 76 de tourner.

A la figure 5, on voit la position 36a dans laquelle l'ergot 36 déclenche l'avance de la fourche 350. Par une cascade de deux renvois d'angle 741, 742 et un tirant 740, le cliquet 74 se relève (figures 5 et 8), ce qui libère la queue 70. Instantanément, et sous l'action du ressort 351, la fourche 350, et la queue 70 de la fourche avancent, vers la droite de la figure 8, vers la position avancée A de la figure 4. Puisque le verrou 77 n'a pas encore débloqué la came 76, ce mouvement d'avance peut se faire sans que la queue 70 ne heurte le coulisseau 71. Le mouvement alternatif du coulisseau 71 continue librement.

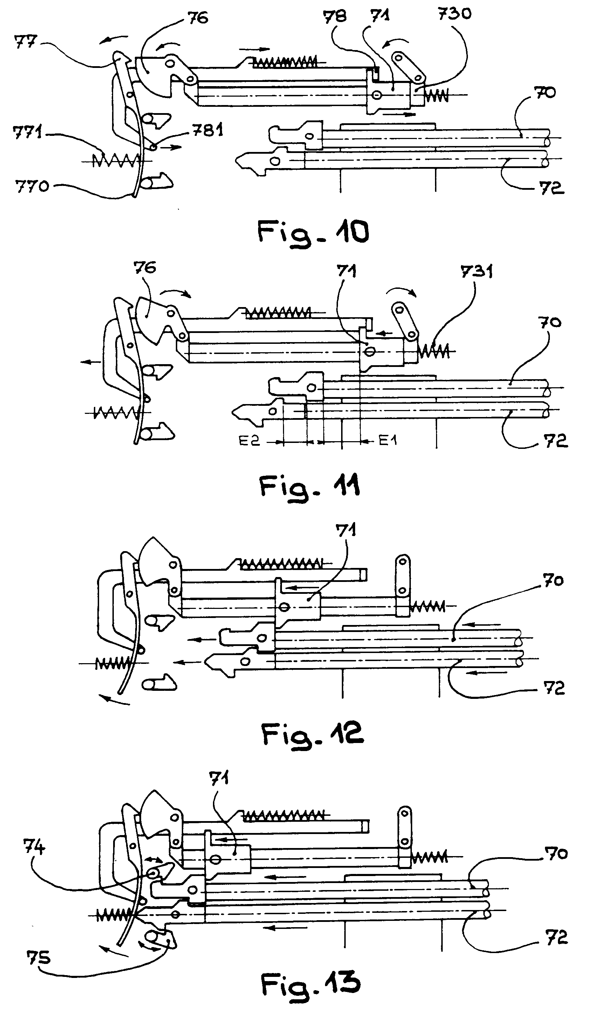

Lorsque l'ergot est parvenu à la position 36b de la figure 5, par une autre cascade d'un tirant 750 et d'un renvoi d'angle 751, le cliquet 75 libère la queue 72 (figures 5 et 9). Instantanément, et sous l'action du ressort 353, le marteau 352 et la queue 72 avancent, vers la droite de la figure 9, et vers la position avancée de la figure 4. On remarque que le verrou 77 n'est plus retenu que par le taquet 781.

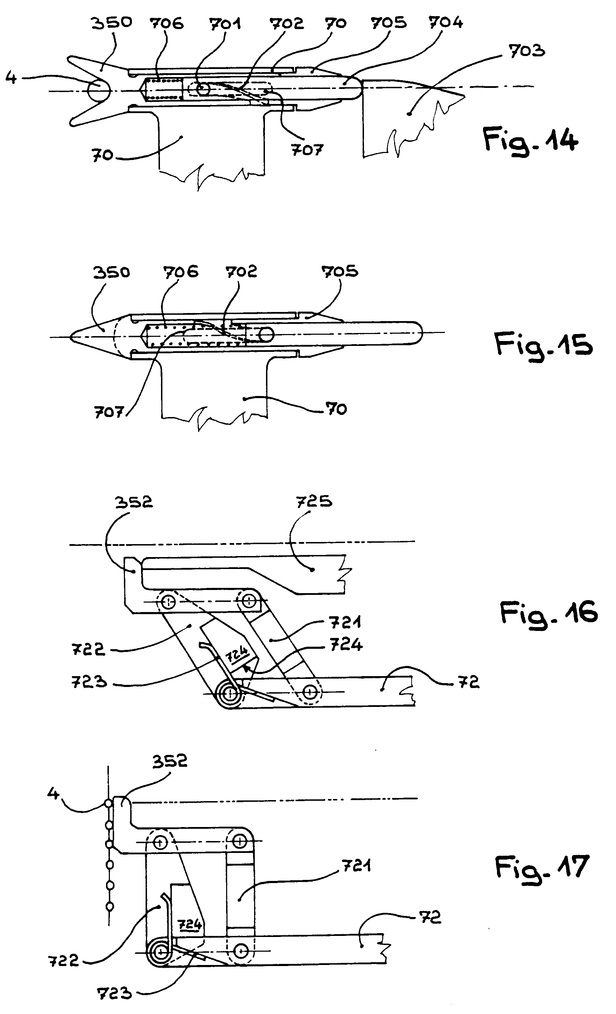

Dès que le coulisseau 71 appuie sur l'épaulement 730 et sur la gachette 78 (figure 10), le taquet 781 libère le verrou 77, et la came 76 bascule, sous la poussée du ressort 731 (figure 11). Le retour du coulisseau 71 va entraîner les queues 70 et 72 vers leur position d'armement (figure 12), où elles sont retenues par les cliquets 74 et 75 (figure 13).

Puis le verrouillage a lieu comme expliqué ci-avant.

Les écarts E1 et E2 bien visibles à la figure 11, entre les positions des queues 70 et 72, et du coulisseau 71, permettent de garantir que le marteau 352 parviendra toujours à la position avancée avant que ne commence le réarmement, et que lors du réarmement, la fourche 350 reculera avant le marteau 352.

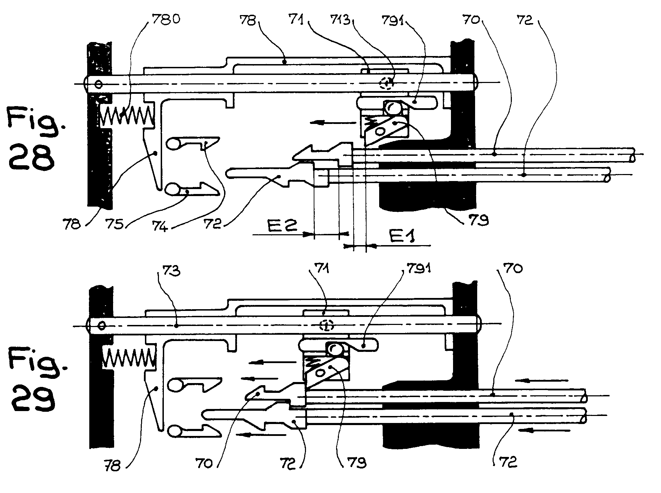

En variante, le coulisseau 71 comporte un ergot 79, pour intégrer la fonction obtenue par la déformation du parallélogramme permettant l'armement des fourches et marteaux. En consultant les figures 24 et suivantes, on voit que la tige 73 recevant le coulisseau 71 est cette fois fixe. Comme auparavant, le coulisseau 71 est actionné par la bielle 711 visible à la figure 5, dont la tête est reliée au point 713. Sous la pression du ressort 790, l'ergot 79 tend à prendre la position déployée représentée à la figure 27. Un poussoir 791 peut glisser dans le coulisseau 79 et prendre soit la position représentée à la figure 27, soit celle représentée à la figure 24. Ce poussoir 791 comporte un logement 792 accueillant une bille 793. La gachette 78 est ici montée coulissante sur la tige 73, et prend naturellement la position représentée à la figure 26 sous la pression du ressort 780.

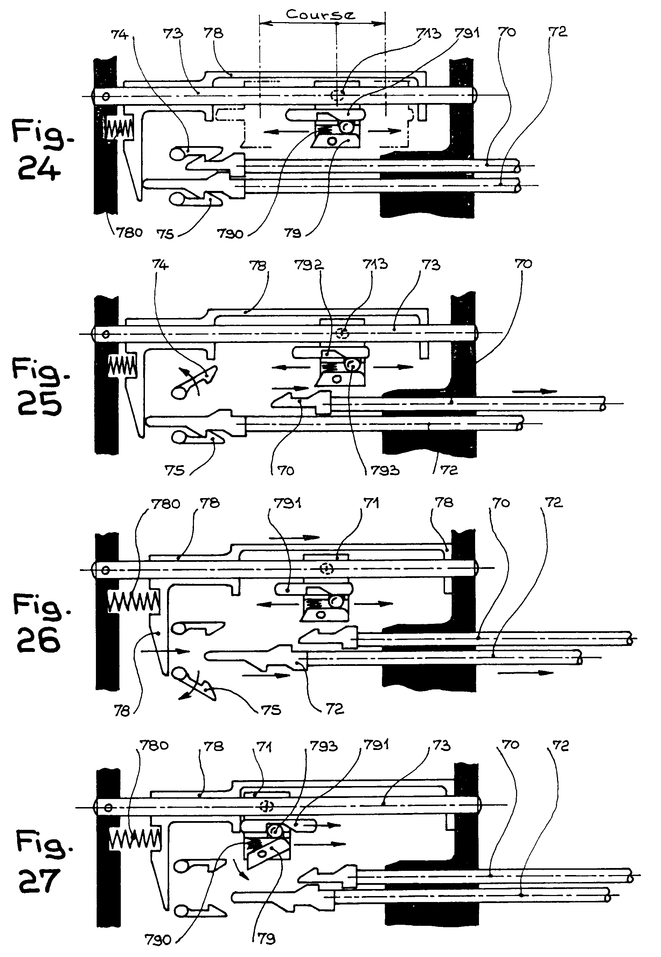

Le déclenchement de la fourche et du marteau est commandé par les cliquets 74 et 75 comme dans la précédente variante. Au moment du deuxième déclenchement, on se trouve dans la position représentée à la figure 26. Ensuite, dès que le coulisseau 71 atteint le point mort de gauche à la figure 27, la gachette 78 repousse le poussoir 791, afin que le logement 792 soit amené en face de la bille 793, ce qui permet à l'ergot 79 de se déployer. Au prochain déplacement du coulisseau 71, l'ergot 79 s'esquive par dessus la queue 70 de la fourche et se déploit à nouveau au delà. Au prochain déplacement en sens contraire du coulisseau 79 (figure 28), l'ergot 79 entraîne les queues 70 et 72 vers leur position d'armement (figure 29), ce qui repousse également la gachette 78 contre la pression du ressort 780. Ensuite, au prochain mouvement du coulisseau 71, le poussoir 791 rencontre l'autre côté de la gachette 78 et glisse dans le coulisseau. La bille 793 se trouve repoussée par la rampe jouxtant le logement 792, et appuie sur l'ergot 79. Celui-ci s'esquive à l'intérieur du coulisseau 71 (figure 23), qui peut alors poursuivre son mouvement de va et vient sans rencontrer la queue 70.

La rotation d'un quart de tour de la fourche 350 est illustrée aux figures 14 et 15. La fourche 350 est montée à rotation possible sur un palier apparaissant à l'extrémité de la queue 70. Cette rotation est contrôlée par le téton 701 d'un poussoir 704. Le téton 701 est engagé dans une lumière hélicoïdale 702 creusée à l'intérieur du fourreau 705 prolongeant la fourche 350 par l'arrière, et est également engagée dans une lumière droite 707 creusée dans le palier apparaissant à l'extrémité de la queue 70. Le poussoir 704 avance à l'intérieur de la fourche 350 lorsqu'il rencontre une butée 703, en position reculée R de la fourche 350 (figure 14), et le poussoir retourne à sa position de repos (figure 15) sous l'action du ressort 706 dès que la fourche 350 avance. La pénétration du poussoir 704 dans le fourreau 705 permet au téton 701 d'agir sur la lumière 702 pour provoquer la rotation d'un quart de tour.

Lorsque l'oeillet 33 passe de la position 33i (figure 3) à la position 33k, le fil 4 passe par dessus la butée 703, puis par dessus l'une des branches de la fourche 350, en se décalant légèrement hors du plan (trait d'axe à la figure 14) dans lequel il se trouve tendu (entre le dernier point où il se trouve déjà collé sur le noyau 1 et l'oeillet 33), grâce à des rampes bien visibles à la figure 14, qui lui permettent de ne pas rester accroché à l'arrière de la fourche 350.

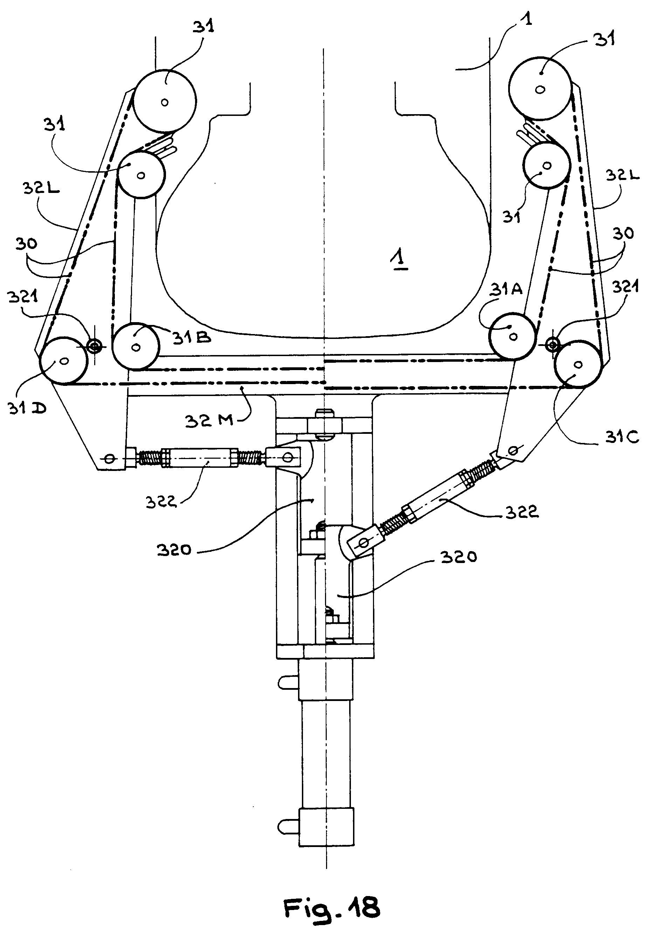

A la figure 16, on peut voir que le marteau 352 est monté sur sa queue 72 par deux biellettes 721, 722 parallèles. Sur l'une 722 de celles-ci agit un ressort de torsion 723 qui tend à faire tourner les biellettes dans le sens des aiguilles d'une montre. Une butée 724 solidaire de la biellette 722 vient en contact sur la queue 72 lorsque le marteau 352 est en position relevée (figure 17). Lorsque le marteau rejoint la position reculée, en R, il rencontre une butée 725 qui l'oblige à s'escamoter légèrement (figure 16), grâce à quoi il ne gêne en aucune manière le fil 4 lorsqu'il est entraîné par l'oeillet 33. Le trait d'axe aux figures 16 et 17 est la trace du plan dans lequel passe le fil 4. Dès que le marteau 352 a quitté la butée 725, c'est-à-dire dès qu'il avance, il se relève pour pouvoir agir convenablement sur le fil 4 qui vient juste d'être rapproché du noyau 1 par la fourche 350. Le mouvement du marteau 352 balaye le plan représenté par sa trace en trait d'axe à la figure 17.

Le principe d'enroulement d'un fil sur le support suppose que celui-ci soit convexe, ou du moins ne présente que de faibles concavités, du genre de celles existant entre les bourrelets et les flancs d'un pneumatique. Or certains pneumatiques sont pourvus d'un sillon central important comme on le voit par exemple dans le brevet US 3 830 273. Pour accepter des courbures du support à forte concavité, il suffit d'ajouter, face à la ou face aux concavités, un presseur ou des presseurs supplémentaires, permettant de plaquer le fil dans le fond de la ou des concavités. L'intervention, au bon moment, de ces presseurs supplémentaires disposés cette fois non plus aux extrémités du tracé d'un arceau, mais à une position intermédiaire, se fait exactement selon le principe expliqué pour les presseurs 35. Un tel presseur comporte simplement un marteau 352, la fourche 350 étant superflue dans la mesure où le tracé du fil posé reste inscriptible dans le même plan de part et d'autre du point du fil 4 sur lequel agit le presseur.

L'ouverture du circuit de guidage est expliquée à l'aide de la figure 18. On reconnaît la partie médiane 32M du support 32. Les parties latérales 32L sont articulées en 321 sur la partie médiane 32M. Le mouvement des parties latérales 32L est commandé par le coulissement du curseur 320 agissant de façon symétrique sur les parties latérales 32 via les barres 322. Pour que la chaîne 30 puisse parcourir un circuit de longueur constante, quelle que soit l'ouverture du circuit de guidage, on peut soit choisir judicieusement le point d'articulation 321, soit prévoir des poulies de tension supplémentaires, (non représentées pour ne pas surcharger les dessins), ou conférer le rôle de tension à l'une des poulies 31 guidant la chaîne 30.

La fabrication d'un renforcement impose de coordonner la rotation du noyau 1 et le mouvement de la chaîne 30 par une commande judicieuse des moteurs 20 et 34. Pour un tour de chaîne 30, le noyau 1 doit avoir tourné d'un petit angle correspondant à deux fois le pas de pose P souhaité pour les fils 4 puisque l'on pose deux arceaux 40 de fil 4 pour un tour complet de l'oeillet 33. Dans la réalisation la plus simple, le rapport des vitesses du noyau 1 et de la chaîne 30 est constant. Or, pour réaliser une carcasse radiale, on souhaite disposer les arceaux successifs 40 de fil (voir figure 2) dans un plan radial. Pour cela, il conviendrait que le noyau 1 tourne par saccades : rotation de l'angle correspondant au pas juste au moment où les presseurs 35 plaquent le fil 4 sur le noyau, et arrêt du noyau 1 pendant tout le temps qu'il faut pour poser un arceau radial.

Pour conserver un mouvement continu du noyau 1, l'invention propose d'utiliser un palliatif : les poulies 31A et 31B disposées de part et d'autre de la partie médiane 32M supportant le brin au trajet aller, et les poulies 31C, 31D disposées de part et d'autre de la partie médiane 32M supportant le brin au trajet retour, sont légèrement décalées circonférentiellement (en prenant le noyau 1 comme référence) pour que, compte tenu du mouvement de rotation relative entre oeillet 33 et noyau 1 pendant que l'oeillet 33 passe d'un côté à l'autre du noyau 1, le fil 4 soit posé sur le sommet du noyau 1 très sensiblement selon le plan théorique contenant la trajectoire souhaitée pour le fil 4 sur le noyau 1 dans chacun des deux sens du mouvement axial de l'oeillet 33 par rapport au noyau 1. Ainsi, les fils 4 se disposent quasi idéalement en arceaux 40 radiaux.

Dans la contre courbure du noyau 1 correspondant au début des flancs, juste après les bourrelets, il faut encore parachever l'adhésion du fil 4 sur le noyau 1. En pratique, il n'est pas nécessaire de faire quelque chose de spécifique : on a constaté que l'application ultérieure d'une couche de caoutchouc de calandrage, ou de tout autre produit intervenant dans la suite de la fabrication du pneumatique, s'avère suffisante.

Les figures 19 à 23 illustrent quant à elles un organe 6 qui permet d'automatiser le départ et l'arrêt de la fabrication d'un renforcement. Cet organe 6 est fixé sur la partie médiane 32M du support 32, où il peut être esquivé lorsqu'il n'est pas employé, pour ne pas perturber la pose du fil 4 (figure 19). Il comporte un couteau 61, une contre lame 62, deux doigts 63, 64.

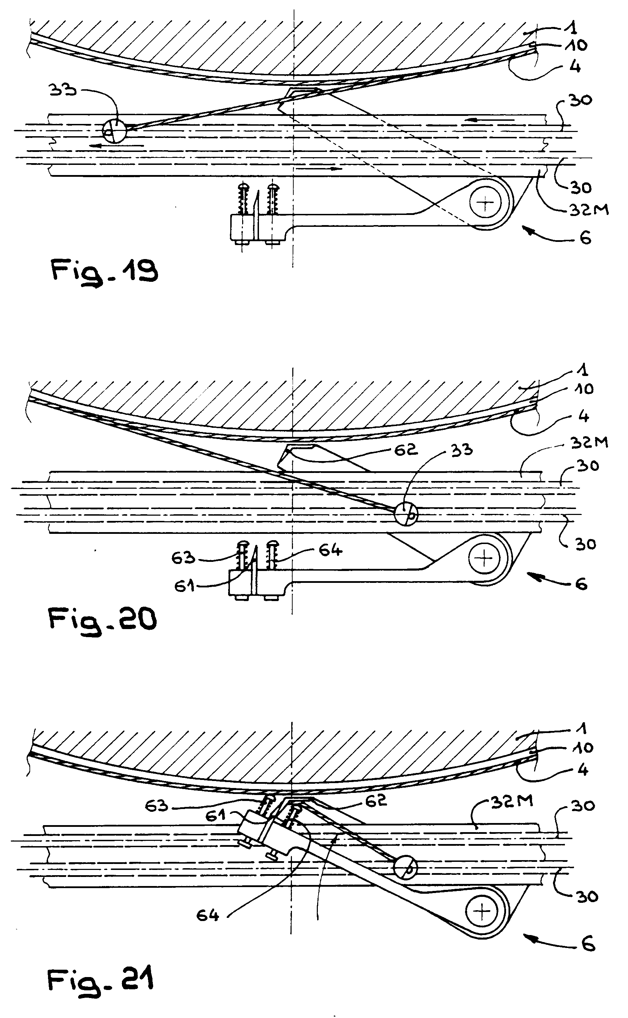

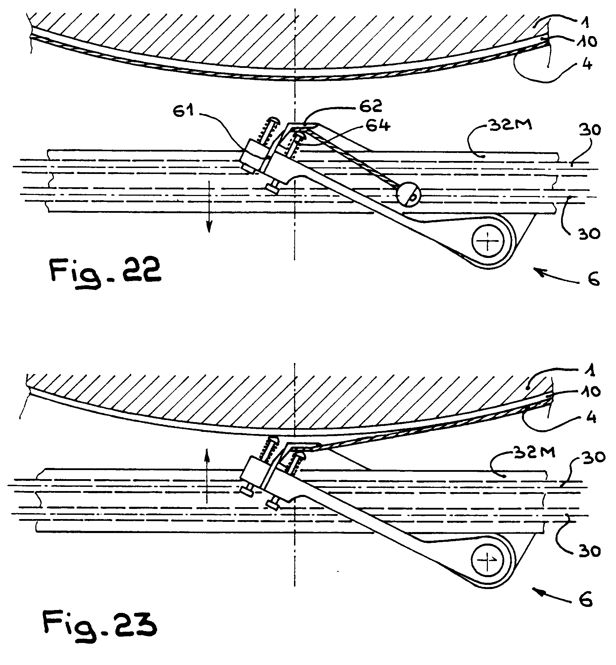

En fin de fabrication du renforcement (figure 20), l'oeillet 33 s'arrête juste après avoir dépassé le plan médian du noyau 1, lors de son passage de gauche vers la droite. L'organe 6 se relève, le couteau 61 avance vers le noyau 1 (figure 21), ce qui cisaille le fil 4 entre le couteau 61 et la contre lame 62. Le doigt 63 applique l'extrémité de fil 4 sur le noyau ; le doigt 64 maintient le fil 4 sur la contre lame 62. L'appareil 3 peut s'ouvrir, le châssis 51 glisse sur le rail 50, ce qui dégage complètement le noyau 1 sur lequel on vient de fabriquer un renforcement (figure 22).

Lors du départ suivant, on rapproche l'appareil 3 du noyau 1 suivant (figure 23), puis on démarre le mouvement de l'oeillet 33. Dès que celui-ci a contourné le noyau, le début du fil 4 se trouve collé sur le noyau 1 prérevêtu de caoutchouc.

Le procédé de fabrication d'une carcasse radiale peut être exécuté selon différentes variantes, pour réaliser une nappe de carcasse, ou plusieurs nappes. On peut réaliser une nappe de carcasse en plusieurs (n) passes de pose, chaque passe recouvrant tout le noyau ; les arceaux radiaux à l'intérieur d'une passe étant posés selon un pas P, la position sur le noyau 1 des fils 4 posés pendant deux passes successives présente alors un déphasage circonférentiel correspondant à P/n. L'homme de métier peut très facilement entrevoir de multiples façons d'utiliser l'invention, selon l'architecture du pneumatique qu'il veut obtenir.

La portée de l'invention n'est pas limitée aux différents organes mécaniques de la machine décrite. l'homme du métier peut très facilement substituer des équivalents, comme par exemple un système d'armement et de déclenchement différent, ou un rail fendu convenablement courbé à la place de poulies pour matérialiser le circuit de guidage.

## Revendications

1. Procédé de fabrication d'un pneumatique en caoutchouc, consistant à appliquer sur un support les différents constituants à la place requise par l'architecture du pneumatique, à appliquer le fil (4) de renforcement sur le support pour former des arceaux (40) contigus de la façon suivante :
- poser le fil en l'appliquant par adhésion sur le support à un départ correspondant au bord d'un arceau,
- déplacer un moyen de guidage, en relation de guidage avec glissement sur le fil, par dessus le support selon une trajectoire en arc qui contourne et survole le support, depuis le départ jusqu'à une arrivée correspondant à l'autre bord du même arceau,
- appliquer le fil, par adhésion, sur le support à ladite arrivée,
- répéter les opérations précédentes de façon alternée, de gauche à droite, puis de droite à gauche par dessus le support, en déplaçant le support par rapport au moyen de guidage d'une valeur correspondant au pas de pose entre deux déplacements alternés dudit moyen de guidage.

2. Procédé selon la revendication 1, caractérisé en ce que le fil de renforcement posé est le fil (4) de carcasse formant des arceaux (40) radiaux sur le support, et en ce que le moyen de guidage effectue un mouvement de va-et-vient entre les zones correspondant à chaque bourrelet du pneumatique.

3. Procédé selon la revendication 2, caractérisé en ce qu'il comporte n passes de pose de fil de carcasse, chaque passe couvrant circonférentiellement tout le support.

4. Procédé selon la revendication 3, caractérisé en ce que les arceaux (40) radiaux lors d'une passe étant posés selon un pas P, les fils posés lors de deux passes successives le sont avec un déphasage circonférentiel correspondant à P/n.

5. Procédé selon l'une des revendications 1 à 4, caractérisé en ce que, lors de chaque changement de direction de l'organe de guidage, on retient le fil (4) au contact du support par l'intervention de moyens presseurs (35) qui exercent une pression sur le fil en direction du support, et qui relâchent cette pression avant le retour de l'organe de guidage.

6. Procédé selon l'une des revendications 1 à 5, caractérisé en ce que le pas de pose du fil est variable.

7. Procédé selon la revendication 6, caractérisé en ce que la variation du pas est sinusoïdale.

8. Procédé selon l'une des revendications 1 à 7, caractérisé en ce que, pour appliquer le fil par adhésion sur le support, au moins au départ et à l'arrivé des arceaux, ledit support est pré-revêtu d'au moins une couche de caoutchouc.

9. Procédé selon l'une des revendications 1 à 8, caractérisé en ce que la surface dudit support a l'allure de la surface interne du pneumatique.

10. Machine de fabrication d'un renforcement pour pneumatique, ledit renforcement étant constitué à partir d'un fil (4) délivré à la demande par un distributeur approprié, ledit fil (4) étant posé sur un support (1) sur lequel on construit progressivement tout ou partie du pneumatique, caractérisée en ce qu'elle comprend :
- un organe de guidage avec glissement dans lequel le fil peut coulisser librement,
- un moyen de déplacement dudit organe de guidage selon une trajectoire en va-et-vient,
- des presseurs (35) disposés au moins à chaque extrémité de ladite trajectoire, pour appliquer le fil (4) sur le support (1),
l'ensemble étant agencé de sorte que, lorsque le fil (4) adhère sur le support (1) grâce à l'intervention d'un presseur (35), le déplacement dudit organe de guidage allonge le trajet du fil (4) entre ledit presseur (35) et le distributeur de fil, tout en présentant le fil (4) par dessus la trace qu'il fera sur le support (1) après pose, la pose intervenant progressivement en arrière de l'organe de guidage, et au plus tard lors de l'intervention d'un autre presseur (35), qui lui-même intervient au plus tard avant le mouvement inverse de l'organe de guidage le long de sa trajectoire en va-et-vient.

11. Machine selon la revendication 10, caractérisée en ce que le moyen de déplacement est constitué essentiellement par un brin souple (30), sans fin, monté dans un circuit de guidage courbé de façon à présenter l'allure générale d'un arc, et en ce que la machine comporte un dispositif (5) de présentation et de réglage de la position du circuit de guidage par rapport au support (1), celui-ci étant introduit à l'intérieur des, et entre les branches de l'arc qu'il forme, et en ce que l'organe de guidage est constitué par un oeillet (33) pivotant fixé sur le brin souple (30) et dans lequel on fait passer le fil (4) de renforcement, l'axe de pivotement de l'oeillet (33) étant perpendiculaire au circuit de guidage, et à l'axe du support (1), et en ce que des presseurs (35) sont diposés à chaque extrémité de l'arc, permettant de saisir le fil (4) chaque fois qu'il y est amené par l'oeillet (33), et de le plaquer sur le support (1), et en ce que la machine comporte des moyens permettant d'animer le brin souple (30), et d'entraîner en rotation le support à une vitesse fonction du temps mis par l'oeillet (33) pour faire un tour complet sur le circuit de guidage et fonction du pas de pose souhaité pour le fil.

12. Machine selon la revendication 10 ou 11, caractérisée en ce que chaque presseur (35) comporte une fourche (350) mobile entre une position reculée (R) éloignée du support et une position avancée (A) dans laquelle la fourche (350) entre en contact avec les constituants déjà en place sur le support (1), et sur laquelle, par son mouvement, l'organe de guidage vient accrocher le fil (4) lorsqu'elle est en position reculée (R), la fourche (350) passant ensuite en position avancée (A).

13. Machine selon la revendication 11, caractérisée en ce que chaque presseur (35) comporte en outre un marteau mobile (352) entre une position reculée (A) éloignée du support (1), et une position avancée (A) où il entre en contact avec le support (1).

14. Machine selon la revendication 13, caractérisée en ce que le marteau prend la position avancée après la fourche, et avant que celle-ci ne revienne en position reculée.

15. Machine selon l'une des revendications 12 à 14, caractérisée en ce que le basculement en position avancée (A), ou reculée (R), est commandé par un ergot (36) fixé sur le brin souple.

16. Machine selon la revendication 11, caractérisée en ce que le circuit de guidage est constitué par un ensemble de poulies (31) montées sur un berceau (32), sur lesquelles le brin souple est engagé.

17. Machine selon la revendication 11, caractérisée en ce que l'ouverture du circuit de guidage est réglable.

18. Machine selon la revendication 17, caractérisée en ce que le circuit de guidage comporte une partie médiane (32M) de part et d'autre de laquelle partent deux parties latérales (32L) articulées sur la partie médiane (32M).

19. Machine selon la revendication 16, caractérisée en ce que les poulies (31) disposées de part et d'autre de la partie médiane (32M) supportant le brin au trajet aller, et les poulies (31) disposées de part et d'autre de la partie médiane (32M) supportant le brin au trajet retour, sont légèrement décalées circonférentiellement.

20. Machine selon l'une des revendications 10 à 19, caractérisée en ce que la surface dudit support a l'allure de la surface interne du pneumatique.

## Claims

1. A method of manufacturing a rubber tyre, consisting in applying the different components, on a support at the place required by the architecture of the tyre, applying the reinforcement thread (4) on the support to form adjacent hoops (40) in the following manner:
- laying the thread by applying it by adhesion to the support at a starting point corresponding to the edge of a hoop;
- displacing a guide means, in guiding relationship with slippage on the thread, over the support along an arcuate trajectory which passes around and skims over the support from the starting point to a point of arrival corresponding to the other edge of the same hoop;
- applying the thread by adhesion to the support at said point of arrival;
- repeating the preceding operations alternately from left to right then from right to left over the support, displacing the support relative to the guide means by an amount corresponding to the laying pitch between two alternate displacements of said guide means.

2. A method according to Claim 1, characterised in that the reinforcement thread laid is the carcass thread (4) forming radial hoops (40) on the support, and in that the guide means carries out a reciprocating movement between the regions corresponding to each bead of the tyre.

3. A method according to Claim 2, characterised in that it comprises n carcass-thread laying passes, each pass circumferentially covering the entire support.

4. A method according to Claim 3, characterised in that the radial hoops (40) on a pass are laid according to a pitch P and the threads laid on two successive passes are laid with a circumferential offset corresponding to P/n.

5. A method according to one of Claims 1 to 4, characterised in that, upon each change in direction of the guide member, the thread (4) is held in contact with the support by the action of presser means (35) which exert pressure on the thread in the direction of the support, and which relieve this pressure before the return of the guide member.

6. A method according to one of Claims 1 to 5, characterised in that the laying pitch of the thread is variable.

7. A method according to Claim 6, characterised in that the variation of the pitch is sinusoidal.

8. A method according to one of Claims 1 to 7, characterised in that, in order to apply the thread by adhesion to the support, at least at the starting point and point of arrival of the hoops, said support is precoated with at least one layer of rubber.

9. A method according to one of Claims 1 to 8, characterised in that the surface of said support is in the shape of the inner surface of the tyre.

10. A machine for the manufacture of a tyre reinforcement, said reinforcement being formed from a thread (4) delivered upon a call by a suitable distributor, said thread (4) being laid on a support (1) on which all or part of the tyre is progressively built, characterised in that it comprises:
- a means for guiding with slippage in which the thread can slide freely,
- a means for displacement of said guide means along a back-and-forth trajectory,
- pressers (35) arranged at least at each end of said trajectory in order to apply the thread (4) against the support (1),
all arranged in such a manner that, when the thread (4) adheres on the support (1) due to the action of a presser (35), the displacement of said guide means lengthens the path of the thread (4) between said presser (35) and the thread distributor, while presenting the thread (4) above the trace which it will make on the support (1) after laying, the laying taking place gradually to the rear of the guide means and at the latest upon the action of another presser (35), which itself acts at the latest before the reverse movement of the guide means along its back-and-forth trajectory.

11. A machine according to Claim 10, characterised in that the displacement means is essentially formed by an endless flexible strand (30) mounted in a curved guide circuit so as to present the general shape of an arc, and in that the machine comprises a device (5) for presentation and adjustment of the position of the guide circuit with respect to the support (1), the latter being introduced into the interior of and between the branches of the arc which it forms, and in that the guide means is formed by a pivoting eyelet (33) fixed on the flexible strand (30) and within which the reinforcement thread is caused to pass, the pivot axis of the eyelet (33) being perpendicular to the guide circuit and to the axis of the support (1), and in that pressers (35) are disposed at each end of the arc, making it possible to grasp the thread (4) whenever it is fed thereto by the eyelet (33) and to apply it onto the support (1), and in that the machine comprises means making it possible to actuate the flexible strand (30) and drive the support in rotation at a speed which is a function of the time taken by the eyelet (33) to make a complete revolution on the guide circuit and a function of the laying pitch desired for the thread.

12. A machine according to Claim 10 or 11, characterised in that each presser (35) comprises a fork (350) which is movable between a retracted position (R) away from the support and an advanced position (A) in which the fork (350) enters into contact with the components already in place on the support (1) and on which, by its movement, the guide means comes to hook the thread (4) when it is in the retracted position (R), the fork (350) then moving into the advanced position (A).

13. A machine according to Claim 11, characterised in that each presser (35) furthermore comprises a hammer (352) which is movable between a retracted position (R) away from the support (1) and an advanced position (A) in which it enters into contact with the support (1).

14. A machine according to Claim 13, characterised in that the hammer assumes the advanced position after the fork and before the latter returns to the retracted position.

15. A machine according to one of Claims 12 to 14, characterised in that the movement into the advanced position (A) or retracted position (R) is controlled by a pin (36) fastened on the flexible strand.

16. A machine according to Claim 11, characterised in that the guide circuit is formed by an assembly of pulleys (31) mounted on a cradle (32) on which the flexible strand is engaged.

17. A machine according to Claim 11, characterised in that the opening of the guide circuit is adjustable.

18. A machine according to Claim 17, characterised in that the guide circuit comprises a central part (32M) from both sides of which there extend two side parts (32L) articulated on the central part (32M).

19. A machine according to Claim 16, characterised in that the pulleys (31) disposed on opposite sides of the central part (32M) supporting the strand on the forward path and the pulleys (31) disposed on both sides of the central part (32M) supporting the strand on the return path are slightly offset circumferentially.

20. A machine according to one of Claims 10 to 19, characterised in that the surface of said support is in the shape of the inner surface of the tyre.

## Patentansprüche

1. Herstellungsverfahren für einen Gummireifen, das darin besteht, daß man auf einen Träger die verschiedenen Bestandteile an der durch den Aufbau des Reifens geforderten Stelle aufbringt und daß man auf die folgende Weise den Verstärkungsdraht (4) auf dem Träger aufbringt, um aneinandergrenzende Bögen (40) zu bilden:
- Verlegen des Drahtes, indem man ihn durch Haftung auf dem Träger an einer Ausgangsstelle aufbringt, die dem Rand eines Bogens entspricht,
- Versetzen einer Führungseinrichtung, die sich gleitend in führender Zuordnung auf dem Draht befindet, über den Träger längs einer bogenförmigen Bewegungsbahn, die um den Träger herum und über ihn hinwegläuft, von der Ausgangsstelle bis zu einer Ankunftsstelle, die dem anderen Rand desselben Bogens entspricht,
- Aufbringen des Drahtes durch Haftung auf dem Träger an der genannten Ankunftsstelle, und
- Wiederholen der vorangehenden Vorgänge alternierend von links nach rechts und dann von rechts nach links über dem Träger, wobei man den Träger in bezug auf die Führungseinrichtung um ein Maß versetzt, das dem Verlegeschritt zwischen zwei alternierenden Versetzungen der genannten Führungseinrichtung entspricht.

2. Verfahren nach Anspruch 1, dadurch **gekennzeichnet**, daß der verlegte Verstärkungsdraht der Karkassendraht (4) ist, der auf dem Träger radiale Bögen (40) bildet, und daß die Führungseinrichtung eine Hin- und Herbewegung zwischen den Bereichen bewirkt, die jedem Wulst des Reifens entsprechen.

3. Verfahren nach Anspruch 2, dadurch **gekennzeichnet**, daß es n Verlege-Arbeitsgänge des Karkassendrahts aufweist, wobei jeder Arbeitsgang in Umfangsrichtung den gesamten Träger abdeckt.

4. Verfahren nach Anspruch 3, dadurch **gekennzeichnet**, daß die radialen Bögen (40) während eines Arbeitsganges längs eines Schrittes P verlegt sind, wobei die Drähte, die während zweier aufeinanderfolgender Schritte verlegt werden, dies mit einer Umfangs-Fadenversetzung durchführen, die P/n entspricht.

5. Verfahren nach einem der Ansprüche 1 bis 4, dadurch **gekennzeichnet**, daß man während jeder Richtungsänderung des Führungsorgans den Draht (4) durch Eingriff von Druckmitteln (35) in Berührung mit dem Träger hält, die auf den Draht in Richtung des Trägers einen Druck ausüben und die diesen Druck vor der Umkehr des Führungsorganes aufheben.

6. Verfahren nach einem der Ansprüche 1 bis 5, dadurch **gekennzeichnet**, daß der Verlegeschritt des Drahtes variabel ist.

7. Verfahren nach Anspruch 6, dadurch **gekennzeichnet**, daß die Änderung des Schrittes sinusartig ist.

8. Verfahren nach einem der Ansprüche 1 bis 7, dadurch **gekennzeichne**t, daß der genannte Träger zum Aufbringen des Drahtes durch Anhaftung auf dem Träger mindestens an der Ausgangsstelle und an der Ankunftsstelle der Bogen vorab mit mindestens einer Lage aus Gummi bzw. Kautschuk verkleidet ist.

9. Verfahren nach einem der Ansprüche 1 bis 8, dadurch **gekennzeichnet**, daß die Oberfläche des genannten Trägers den Verlauf der Innenoberfläche des Reifens aufweist.

10. Maschine zur Herstellung einer Verstärkung für einen Reifen, wobei die genannte Verstärkung aus einem Draht (4) gebildet ist, der auf Verlangen von einem geeigneten Verteiler ausgegeben wird, und wobei der genannte Draht (4) auf einem Träger (1) verlegt wird, auf dem man fortschreitend den gesamten Reifen oder einen Teil dessen aufbaut, dadurch **gekennzeichnet**, daß sie folgende Merkmale aufweist:
- ein Organ zur gleitenden Führung, in dem sich der Draht frei verschieben kann,
- eine Einrichtung zum Versetzen des genannten Führungsorgans längs einer Bewegungsbahn in Hin- und Herrichtung, und
- Andrückeinrichtungen (35), die mindestens an jedem Ende der genannten Bewegungsbahn angeordnet sind, um den Draht (4) auf dem Träger (1) anzulegen,
wobei die Anordnung derart eingerichtet ist, daß, wenn der Draht (4) auf dem Träger (1) dank des Eingriffes einer Andrückeinrichtung (35) anhaftet, die Versetzung des genannten Führungsorganes den Weg des Drahtes (4) zwischen der genannten Andrückeinrichtung (35) und dem Drahtverteiler verlängert, während es gleichzeitig den Draht (4) über dem Verlauf, den er auf dem Träger (1) nach der Verlegung aufweisen wird, darbietet, wobei die Verlegung fortlaufend hinter dem Führungsorgan erfolgt, und später während des Eingriffs einer anderen Andrückeinrichtung (35), die ihrerseits später vor der umgekehrten Bewegung des Führungsorganes längs seiner Bewegungsbahn bei der Hin- und Herbewegung eingreift.

11. Maschine nach Anspruch 10, dadurch **gekennzeichnet**, daß die Versetzungseinrichtung im wesentlichen von einem weichen Endlosstrang (30) gebildet ist, der in einem gekrümmten Führungsumlauf derart angebracht ist, daß er den allgemeinen Verlauf eines Bogens darbietet, daß die Maschine eine Darbiete- und Regulierungsvorrichtung (5) für die Lage des Führungsumlaufes in bezug auf den Träger (1) aufweist, welcher innerhalb des Bogens und zwischen dessen Armen, die er bildet, eingeführt ist, daß das Führungsorgan von einer schwenkbaren Öse (33) gebildet ist, die auf dem weichen Strang (30) befestigt ist und in welcher man den Verstärkungsdraht (4) hindurchlaufen läßt, wobei die Schwenkachse der Öse (33) senkrecht zum Führungsumlauf und zur Achse des Trägers (1) steht, daß Andrückeinrichtungen (35) an jedem Ende des Bogens angeordnet sind und es gestatten, den Draht (4) jedesmal zu ergreifen, wenn er durch die Öse (33) herangeführt ist, und ihn auf den Träger (1) aufzudrücken, und daß die Maschine Mittel aufweist, die es gestatten, den weichen Strang (30) in Bewegung zu versetzen und den Träger mit einer Geschwindigkeit zur Drehung anzutreiben, die eine Funktion der Zeit ist, die von der Öse (33) in Anspruch genommen wird, um eine vollständige Runde auf dem Führungsumlauf durchzuführen, sowie eine Funktion des für den Draht angestrebten Verlegeschrittes.

12. Maschine nach Anspruch 10 oder 11, dadurch **gekennzeichnet**, daß jede Andrückeinrichtung (35) eine Gabel (350) aufweist, die zwischen einer zurückgezogenen Lage (R), die vom Träger entfernt ist, und einer vorgefahrenen Lage (A) beweglich ist, in welcher die Gabel (350) in Berührung mit den Bestandteilen tritt, die sich bereits auf dem Träger (1) in ihrer Lage befinden, und auf der das Führungsorgan den Draht (4) durch seine Bewegung ankoppelt, wenn sie sich in der zurückgezogenen Lage (R) befindet, wobei die Gabel (350) nachfolgend in die vorgefahrene Lage (A) übergeht.

13. Maschine nach Anspruch 11, dadurch **gekennzeichnet**, daß jede Andrückeinrichtung (35) außerdem einen Hammer (352) aufweist, der zwischen einer zurückgezogenen Lage (A), die vom Träger (1) entfernt ist, und einer vorgefahrenen Lage (A) beweglich ist, wo er in Berührung mit dem Träger (1) tritt.

14. Maschine nach Anspruch 13, dadurch **gekennzeichnet**, daß der Hammer die ausgefahrene Lage nach der Gabel einnimmt, und bevor diese wieder in die zurückgezogene Lage zurückkehrt.

15. Maschine nach einem der Ansprüche 12 bis 14, dadurch **gekennzeichnet**, daß die Kippbewegung in vorgefahrener Lage (A) oder zurückgezogener Lage (R) durch eine Nase (36) gesteuert wird, die auf dem weichen Strang befestigt ist.

16. Maschine nach Anspruch 11, dadurch **gekennzeichnet**, daß der Führungsumlauf von einer Anordnung aus Treibscheiben (31) gebildet ist, die auf einem Schlitten (32) montiert sind und auf denen der weiche Strang angreift.

17. Maschine nach Anspruch 11, dadurch **gekennzeichnet**, daß die Öffnung des Führungsumlaufes regulierbar ist.

18. Maschine nach Anspruch 17, dadurch **gekennzeichnet**, daß der Führungsumlauf einen mittleren Teil (32M) aufweist, von dem aus sich beiderseits zwei seitliche Teile (32L) erstrecken, die mit dem mittleren Teil (32M) gelenkig verbunden sind.

19. Maschine nach Anspruch 16, dadurch **gekennzeichnet**, daß die Treibscheiben (31), die beiderseits des mittleren Teils (32M) angeordnet sind und den Strang beim Hinweg abstützen, und die Treibscheiben (31), die beiderseits des mittleren Teils (32M) angeordnet sind und den Strang beim Rückweg abstützen, in Umfangsrichtung leicht versetzt sind.

20. Maschine nach einem der Ansprüche 10 bis 19, dadurch **gekennzeichnet**, daß die Oberfläche des genannten Trägers den Verlauf der Innenoberfläche des Reifens aufweist.
